# EUROPEAN PATENT APPLICATION

(11) **EP 1 518 898 A1**
(43) Date of publication of application: **30.03.2005**
(21) Application number: 02738647.3
(22) Date of filing: 10.06.2002
(51) Int. Cl.: C08L 27/12

(54) **FLUORORUBBER COMPOSITION AND CURED FLUORORUBBER FORMED ARTICLE USING THE SAME AND METHOD FOR PRODUCTION THEREOF**

(71) Applicant: UCHIYAMA MANUFACTURING CORP., Okayama-shi, Okayama 702-8004 (JP)
(72) Inventor: OCHO, Masaya c/o Uchiyama Manufacturing Corp., Akaiwa-gun Okayama 701-2221 (JP); KATAYAMA, Tatsuo c/o Uchiyama Manufacturing Corp., Akaiwa-gun Okayama 701-2221 (JP); NANBA, Takashi c/o Uchiyama Manufacturing Corp., Akaiwa-gun, Okayama 701-2221 (JP); OKAMOTO, Masaru c/o Uchiyama Manufacturing Corp., Akaiwa-gun, Okayama 701-2221 (JP)
(74) Representative: Breese, Pierre
(86) International application number: PCT/JP2002/005738
(87) International publication number: WO 2003/104321

(57) **Abstract**

There are provided a polyol curable fluororubber composition using a fluororubber of general use, a cured fluororubber formed article used as a grommet, a seal packing and the like for a gas sensor which can be used under high temperature circumstances using this, and a method of producing the same. A polyol curable fluororubber composition, which comprises 100 parts by weight of a fluororubber, 6 to 15 parts by weight of magnesium oxide, 0.5 to 5 parts by weight of a hydrotalcite group compound and 20 to 55 parts by weight of a mixture of thermal black and a bituminous coal filler. A cured fluororubber formed article which is produced by forming and curing the fluororubber composition in the presence of a polyol curing agent, and then subjecting the cured formed product to a stepwise temperature elevation treatment in a temperature range of 100°C to 300°C. According to the present invention, an article which can be used as a grommet, seal packing and the like for a gas sensor under high temperature circumstances, such as an oxygen sensor for an automobile, can be produced, at a reduced cost.

## Description

### Technological Field

The present invention relates to a fluororubber composition, a cured fluororubber formed article using said fluororubber composition, and a method for producing said cured fluororubber formed article. More specifically, the present invention relates to a fluororubber composition which can be cured with a polyol, a cured fluororubber formed article used as, for example, a grommet, seal packing and the like for an automobile gas sensor using said fluororubber composition, and a method for producing said cured tluororubber formed article.

### Background Art

Gas sensors such as an automobile oxygen sensor and the like are generally used under high temperature circumstances of about 240 to 300°C, consequently, large thermal load is applied on its sealed portion.

As a forming material of a seal portion used under such high temperature circumstances, perfluoro ether-based fluororubbers are conventionally used.

The perfluoro ether-based fluororubber includes, for example, CURRETS manufactured by Dupont Dow Elastomer.

CURRETS has an extremely excellent property from the standpoint of heat resistance. However, CURRETS has poor compression set resistance, and is vary expensive, therefore, it is a material showing poor general usability as an automobile seal material.

An object of the present invention is to provide a fluororubber composition which can be cured with a polyol using a fluororubber of general use, a cured fluororubber formed article used, for example, as a grommet, seal packing and the like for an automobile gas sensor and the like, which can be used even under high temperature circumstances, using said fluororubber composition, and a method for producing said cured fluororubber formed article.

### Disclosure of the Invention

The present inventors have intensively investigated variously for attaining the above-mentioned object, and resultantly found that the above-mentioned object can be attained by forming and curing a fluororubber composition which can be cured with a polyol using a fluororubber of general use in the presence of a polyol curing agent, and then subjecting the cured formed product to a stepwise temperature elevation treatment in a temperature range of 100°C to 300°C, leading to completion of the present invention.

Namely, the fluororubber composition which can be cured with a polyol of the present invention comprises 100 parts by weight of a fluororubber, 6 to 15 parts by weight of magnesium oxide, 0.5 to 5 parts by weight of a hydrotalcite group compound and 20 to 55 parts by weight of a mixture of thermal black and a bituminous coal filler.

As the fluororubber, fluororubbers of general use can be used, and preferable is use of a vinylidene fluoride-hexafluoropropene-based copolymerized rubber. The reason for this is that the vinylidene fluoride-hexafluoropropene-based copolymerized rubber is cheaper among fluororubbers, and has excellent compression set resistance.

Magnesium oxide is compounded in an amount of 6 to 15 parts by weight based on 100 parts by weight of a fluororubber rubber. The reason for this is that when the amount of magnesium oxide is less than 6 parts by weight based on 100 parts by weight of a fluororubber, compression crack resistance deteriorates, while when over 15 parts by weight, compression set deteriorates. The amount of magnesium oxide is more preferably 8 to 12 parts by weight based on 100 parts by weight of a fluororubber.

The hydrotalcite group compound is a solid solution of magnesium oxide and aluminum oxide, and represented by the general formula Mg_{0.7}Al_{0.5}O_{1.15}. Specific examples thereof include ALKAMIZER® 1, ALKAMIZER® 2, DHT-4A® 2, KYOWARD® 2000 and the like (all manufactured by Kyowa Chemical Indusry Co., Ltd.).

The hydrotalcite group compound is compounded in an amount of 0.5 to 5 parts by weight based on 100 parts by weight of a fluororubber. The reason for this is that when the amount of a hydrotalcite group compound is less than 0.5 parts by weight based on 100 parts by weight of a fluororubber, compression set deteriorates, while when over 5 parts by weight, compression crack resistance deteriorates, and scorch is generated in curing. The amount of a hydrotalcite group compound is more preferably 1 to 3 parts by weight based on 100 parts by weight of a fluororubber.

The mixture of thermal black and a bituminous coal filler is compounded in an amount of 20 to 55 parts by weight based on 100 parts by weight of a fluororubber. The reason for this is that when the amount of a mixture of thermal black and a bituminous coal filler is less than 20 parts by weight based on 100 parts by weight of a fluororubber, compression crack resistance deteriorates, while when over 55 parts by weight, compression set resistance deteriorates and hardness increases, also leading to deterioration of product forming property. The amount of a mixture of thermal black and a bituminous coal filler is more preferably 30 to 50 parts by weight based on 100 parts by weight of a fluororubber.

It is preferable that the mixing weight ratio of thermal black to bituminous coal filler is 10/90 to 90/10. The reason for this is that when mixing weight ratio of thermal black to bituminous coal filler is out of the range of 10/90 to 90/10, deterioration of compression set and deterioration of compression crack due to decrease in strength are observed. The mixing weight ratio of thermal black to bituminous coal filler is further preferably 30/70 to 70/30.

Even compounding chemicals generally used in fluororubber industry other than the above-mentioned essential components can also be appropriately compounded in a range not disturbing the effect of the present invention.

The above-mentioned fluororubber composition is kneaded using, for example, a kneader, intermix, Banbury mixer, oven roll and the like.

The cured fluororubber formed article of the present invention is obtained by forming and curing the above-mentioned fluororubber composition in the presence of a polyol curing agent, and then subjecting the cured formed product to a stepwise temperature elevation treatment in a temperature range of 100°C to 300°C.

In the above-mentioned fluororubber composition, a polyol curing agent is mixed in curing with a polyol. As the polyol curing agent, 2,2-bis(4-hydroxyphenyl)propane [bisphenol A], 2,2-bis(4-hydroxyphenyl)perfluoropropane [bisphenol AF] and the like can be used. It is more preferable that these curing agents are compounded in an amount of 1 to 5 parts by weight based on 100 parts by weight of a fluororubber.

Forming and curing in the presence of a polyol curing agent is performed by gradually discharging the above-mentioned mixture in the form of sheet, or making the above-mentioned mixture into given shape using an extruder and the like, then, forming and curing the mixture at 150 to 230°C for about 1 to 30 minutes using a compression press, injection molding machine and the like. By this, the mixture is formed and cured into the intended formed article, for example, an article in the form of grommet, seal packing and the like.

After the above-mentioned forming and curing, a stepwise temperature elevation treatment (secondary curing) is conducted. The object for such a stepwise temperature elevation treatment is to gradually generate a gas to be generated in the temperature elevation treatment (secondary curing), and to prevent generation of fine cracking and the like on the formed and cured product and to prevent deterioration of compression crack resistance.

The stepwise temperature elevation treatment can be conducted, for example, in an air oven.

It is necessary that the stepwise temperature elevation treatment is conducted in a temperature range of 100°C to 300°C. The reason for this is that when less than 100°C, the effect of the thermal treatment does not occur, while when over 300°C, thermal decomposition of a polymer is caused, undesirably.

In the present invention, the stepwise temperature elevation treatment means a temperature elevation treatment in the form of step in which desired temperature is kept for given time, then, the temperature is raised, and again, another desired temperature is kept for given time, and this procedure is repeated. Specific examples of such a temperature elevation treatment in the form of step include temperature elevation properties such as at 125°C for 2 hours, at 160°C for 2 hours, at 200°C for 6 hours, at 260°C for 5 hours, and at 300°C for 2 hours. The frequency of keeping at desired temperature, keeping temperature and keeping time in the stepwise temperature elevation treatment can be set arbitrarily. However, the initial keeping temperature is advantageously less than 250°C, and it is preferable that temperature is kept at least once in a temperature range of 100 to 150°C, 150 to 250°C and 250 to 300°C, and temperature is kept for 1 to 24 hours, in each procedure.

The cured fluororubber formed article of the present invention produced according to the production method of the present invention described above can be used as a grommet for sensor, seal packing for sensor and the like which can be used under high temperature circumstances of 240 to 300°C.

### Best Modes For Carrying Out the Invention

Next, the present invention will be illustrated by the following examples.

### (Example 1)

100 parts by weight of a fluororubber containing a polyol curing agent (manufactured by Daikin Industries, Ltd., DAIER® G 717), 8 parts by weight of magnesium oxide (manufactured by Kyowa Chemical Indusry Co.,Ltd., KYOWAMAG 150®), 2 parts by weight of a hydrotalcite group compound (manufactured by Kyowa Chemical Indusry Co.,Ltd., DHT-4A®), 15 parts by weight of thermal blank (manufactured by Huber, MT carbon black) and 18 parts by weight of a bituminous carbon filler (manufactured by Coal Fillers, AUSTIN BLACK 325) were kneaded in an open roll, to obtain a polyol curable fluororubber composition 1a (polyol curing agent had been compounded) according to the present invention. The before described fluororubber (DAIER® G-717) used in this example contains a polyol curing agent in an amount of 1 to 5 parts by weight based on 100 parts by weight of a fluororubber.

The fluororubber composition 1a (polyol curing agent had been compounded) containing a curing agent added was made into a sheet, and the sheet w(150 mm × 150 mm × 2 mm) as formed and cured at 190°C for 5 minutes using a pressurized press, to obtain a primary cured sheet 1b.

Separately, the fluororubber composition 1a (polyol curing agent had been compounded) containing a curing agent added was made into a sheet, and an O ring (line diameter 3.4 mm, internal diameter 25 mm) made by this sheet was formed and cured at 190°C for 5 minutes using a pressurized press to obtain a primary cured O ring 1c.

Further, a mold for making a sample in the form of solid cylinder having an outer diameter of 10 mm and a length of 11 mm and having four holes having an internal diameter of 1 mm was used. The fluororubber composition 1a (polyol curing agent had been compounded) containing a curing agent added was formed and cured at 190°C tor 5 minutes using said mold, to obtain a primary cured cylindrical article 1d (an outer diameter of 10 mm and a length of 11 mm and having four holes having an internal diameter of 1 mm).

The resulted primary cured sheet 1b, primary cured O ring 1c and primary cured cylindrical article 1d were subjected to a stepwise temperature elevation treatment of sequentially raising temperature from 125°C for 2 hours, 160°C for 2 hours, 200°C for 6 hours, 260°C for 5 hours, to 300°C for 2 hours, to obtain a fluororubber cured formed article 1B (sheet), 1C (O ring) and 1D (cylindrical article), respectively.

### (Example 2)

A fluororubber cured formed article 2B (sheet), 2C (O ring) and 2D (cylindrical article) according to the present invention were obtained, respectively, by repeating the same procedure as in Example 1, except that temperature was kept at 260°C for 5 hours and, then, at 300°C for 2 hours instead of sequential temperature raising from 125°C for 2 hours, 160°C for 2 hours, 200°C for 6 hours, 260°C for 5 hours, to 300°C for 2 hours.

### (Comparative Example 1)

A fluororubber cured formed article R1B (sheet), R1C (O ring) and R1D (cylindrical article) according to a comparative example were obtained, respectively, by repeating the same procedure as in Example 1, except that the amount of magnesium oxide was changed to 3 parts by weight from 8 parts by weight, the amount of a hydrotalcite group compound was changed to 0 part by weight from 2 parts by weight, the amount of thermal black was changed to 35 parts by weight from 15 parts by weight, the amount of a bituminous carbon filler was changed to 0 part by weight from 18 parts by weight and the amount of a curing aid for fluororubber (manufactured by Ohmi Chemical Indusry Co., Ltd., CURBIT) was changed to 6 parts by weight from 0 part by weight.

### (Comparative Example 2)

A fluororubber cured formed article R2B (sheet), R2C (O ring) and R2D (cylindrical article) according to a comparative example were obtained, respectively, by repeating the same procedure as in Example 1, except that the amount of magnesium oxide was changed to 3 parts by weight from 0 parts by weight, the amount of a hydrotalcite group compound was changed to 0 part by weight from 2 parts by weight, and the amount of a curing aid for fluororubber (manufactured by Ohmi Chemical Indusry Co.,Ltd., CURBIT) was changed to 6 parts by weight from 0 part by weight.

### (Comparative Example 3)

A fluororubber cured formed article R3B (sheet), R3C (O ring) and R3D (cylindrical article) according to a comparative example were obtained, respectively, by repeating the same procedure as in Example 1, except that the amount of a hydrotalcite group compound was changed to 0 part by weight from 2 parts by weight, and the amount of a curing aid for fluororubber (manufactured by Ohmi Chemical Indusry Co.,Ltd., CURBIT) was changed to 2 parts by weight from 0 part by weight.

### (Comparative Example 4)

A fluororubber cured formed article R4B (sheet), R4C (O ring) and RAD (cylindrical article) according to a comparative example were obtained, respectively, by repeating the same procedure as in Example 1, except that the amount of a hydrotalcite group compound was changed to 0 part by weight from 2 parts by weight.

### (Comparative Example 5)

A fluororubber cured formed article R5B (sheet), R5C (O ring) and R5D (cylindrical article) according to a comparative example were obtained, respectively, by repeating the same procedure as in Example 1, except that the amount of magnesium oxide was changed to 0 part by weight from 8 parts by weight and the amount of a hydrotalcite group compound was changed to 8 parts by weight from 2 parts by weight.

### (Test Example 1)

The physical properties at ordinary state of the cured formed articles 1B, 2B, R1B to R5B were conducted according to ISO (international standardization organization) 37, ISO (international standardization organization) 7619.

The cured formed articles 1C, 2C, R1C to R5C and the cured formed articles 1D, 2D, R1D to R5D were subjected to a pressure resistant test according to ISO (international standardization organization) 815.

The compression set resistance test was conducted for the O rings 1C, 2C, R1C to R5C. The cured formed articles 1C, 2C, R1C to R5C were left at 280°C for 24 hours, then, compressed by 25%.

The compression crack resistance test was conducted while considering application to an actual grommet for oxygen sensor. Namely, the cured formed articles 1D, 2D, R1D to R5D were compressed so that the outer diameter thereof was 8 mm and left in an oven at 280°C for 24 hours while maintaining the compression, and the number of the articles cracked after releasing of pressure was evaluated as compression crack resistance.

The test results are shown in Table 1.

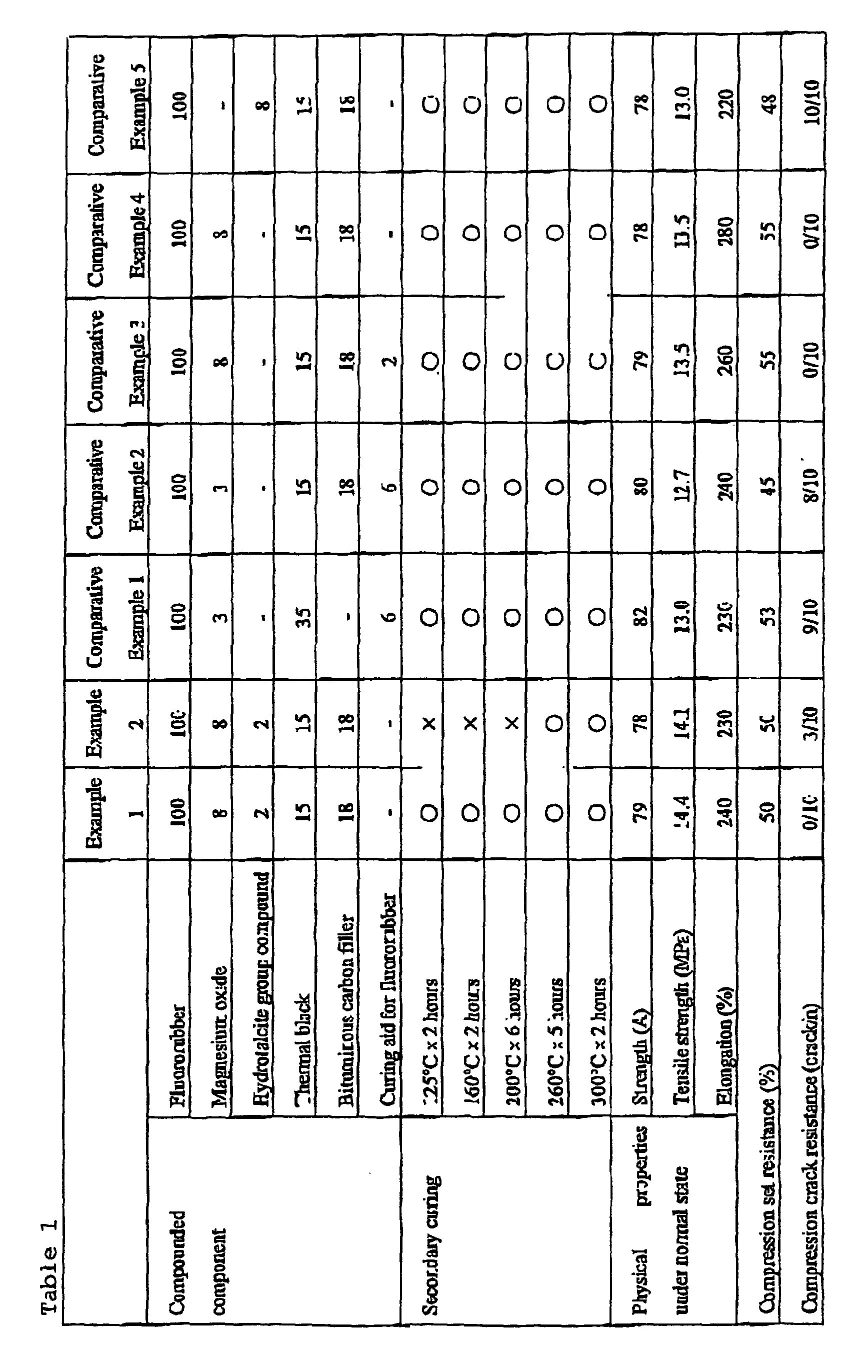

Table 1 shows that Comparative Example 1 (cured formed article R1D) having basic compounding of a fluororubber of general use is remarkably inferior in compression crack resistance as compared with Example 1 (cured formed article 1D) .

Comparative Example 2 (cured formed article R2C) and Comparative Example 5 (cured formed article R5C), showing compression set resistance smaller than that of Example 1 (cured formed article 1C), are remarkably inferior in compression crack resistance (cured formed article 1D and, cured formed article R2D, cured formed article R5D). On the other hand, Comparative Example 3 (cured formed article R3D) and Comparative Example 4 (cured formed article R4D), showing excellent compression crack resistance like in Example 1 (cured formed article 1D), have poor compression set (cured formed article 1C and, cured formed article R3C, cured formed article R4C).

Further, compression crack resistance varies also depending on the temperature elevation treatment method in secondary curing (cured formed article 1D and, cured formed article 2D).

The results of Test Example 1 teach that cured fluororubber formed articles of the present invention show small compression set and excellent in compression crack resistance.

As described above, according to the present invention, a cured formed article excellent in compression set resistance and compression crack resistance under high temperature circumstances is obtained using a fluororubber of general use, therefore, an article which can be used as a grommet, seal packing and the like for a gas sensor under high temperature circumstances such as an automobile oxygen sensor and the like can be produced at low cost.

### Industrial Applicability

As described above, the fluororubber composition of the present invention can be cured with a polyol. The cured fluororubber formed article of the present invention can be used even under high temperature circumstances, and is suitable for use as, for example, a grommet, seal packing and the like of an automobile gas sensor.

## Claims

1. A polyol curable fluororubber composition, comprising 100 parts by weight of a fluororubber, 6 to 15 parts by weight of magnesium oxide, 0.5 to 5 parts by weight of a hydrotalcite group compound and 20 to 55 parts by weight of a mixture of thermal black and a bituminous coal filler.

2. The polyol curable fluororubber composition according to Claim 1, wherein the fluororubber is a vinylidene fluorido-hexafluoropropene-based copolymerized rubber.

3. The polyol curable fluororubber composition according to Claim 1 or 2, wherein the mixing weight ratio of thermal black to bituminous coal filler is 10/90 to 90/10.

4. A cured fluororubber formed article which is produced by forming and curing the polyol curable fluororubber composition according to any of Claims 1 to 3, in the presence of a polyol curing agent, and then subjecting the cured formed product to a stepwise temperature elevation treatment in a temperature range of 100°C to 300°C.

5. A method of producing a cured fluororubber formed article, comprising the steps of forming and curing the polyol curable fluororubber composition according to any of Claims 1 to 3, in the presence of a polyol curing agent, and then subjecting the cured formed product to a stepwise temperature elevation treatment in a temperature range of 100°C to 300°C.
